# EUROPEAN PATENT APPLICATION

(11) **EP 4 578 259 A1**
(43) Date of publication of application: **02.07.2025**
(21) Application number: 24223162.9
(22) Date of filing: 24.12.2024
(51) Int. Cl.: A01D 34/73, A01D 34/82, A01D 34/00

(54) **ACCESSORY ARRANGEMENT FOR A CUTTING UNIT, RELATIVE CUTTING UNIT AND MOBILE DEVICE COMPRISING THE ACCESSORY ARRANGEMENT**

(30) Priority: 27.12.2023 IT 202300028119
(71) Applicant: Stiga S.p.A., 31033 Castelfranco Veneto (TV) (IT)
(72) Inventor: SCAPIN, Michele, I-36061 Bassano del Grappa (VI) (IT); CECCHETTO, Mauro, I-35018 San Martino di Lupari (PD) (IT); FOSCARO, Carlo, I-31050 Casacorba di Vedelago (TV) (IT); CALESSO, Simone, 31033 Castelfranco Veneto (TV) (IT); FAVRETTO, Matteo, 31033 Castelfranco Veneto (TV) (IT); BACCINI, Federico, 31033 Castelfranco Veneto (TV) (IT)
(74) Representative: PGA S.p.A.

(57) **Abstract**

The present invention relates to an accessory arrangement (10) for a cutting unit (100) of a mobile device (200) having a cutting plate (1) provided with a support body (2) and at least one blade (3). The accessory arrangement (10) comprises a protection disc (4) and a mounting unit (5) adapted to connect the protection disc to the cutting plate (1). The mounting unit comprises: a shaft (51) configured to be constrained to a lower surface (21) of the support body of the cutting plate, a hub (52) fitted on the shaft, a pair of bearings (53, 54), an axial support member (57) and first fixing means (55).

## Description

### FIELD OF THE INVENTION

The present invention relates to an accessory arrangement adapted to be installed in a cutting unit of a mobile device suitable for performing grass cutting operations, such as for example a lawnmower device. The accessory arrangement according to the present invention is configured to be installed in the context of a cutting unit of a mobile device, in particular of a lawnmower device, so as to be able to more safely and efficiently carry out grass mowing operations.

In addition, the present invention relates to a cutting unit comprising the aforesaid accessory arrangement. The present invention also relates to a mobile device suitable for performing grass cutting operations comprising the aforesaid cutting unit.

It is also an object of the present invention a method for mounting the aforesaid cutting unit to a mobile device suitable for performing grass cutting operations.

The present invention also relates to a method for integrating a mobile device suitable for performing grass cutting operations.

### STATE OF THE ART

In the field of gardening and ground maintenance it is known to use mobile lawnmower devices provided with cutting apparatuses to perform a treatment of a turf.

Among the lawnmower devices on the market, robotic lawnmowers are particularly appreciated, which are provided with self-driving systems and consequently minimize user interventions. In principle, the user's intervention is limited to giving start and/or stop commands and possibly programming the cutting operations.

Typically, the robotic lawnmowers are provided with cutting plates on the lower surface of the casing, i.e. the face of the casing facing the ground on which to perform the cutting action. The conventional cutting plates are composed of a rotating support, to which one or more blades are associated which are adapted to perform the effective treatment of the turf on which the robot is moving. The cutting plates are rotated by corresponding drive shafts connected to a motor of the lawnmower device, which can be a dedicated cutting motor or coincide with the traction motor of the device itself.

When the grass of the ground to be treated is particularly tall, a considerable level of friction is established between the blades and the grass to be cut. Such friction hinders the rotation of the cutting plate and adversely affects the overall energy efficiency of the cutting process

In addition, due to the movements of the robot and the rotation of the cutting plate, it may happen that the cutting blades interfere with some elements present on the turf, such as for example stones. Given the high rotation speeds of the blades, these elements can undergo considerable acceleration and be lifted from the ground, exposing the components of the lawnmower device to the danger of a collision that could cause them to break and/or malfunction.

In this regard, the lawnmower devices are generally provided with an idle protection disc that is mounted to the hub that connects the cutting plate to the drive shaft of the motion generated by the motor. Specifically, the idle protection disc is mounted by means of special bearings so that it is kinetically released from the cutting plate. In fact, the idle protection disc is interposed between the cutting plate and the ground, exposing only the blades. In this way, the contact surface between the cutting plate and the grass on the ground is minimized in the first place and, consequently, the friction that hinders the activation of the blades is contained. In addition, the idle protection disc acts as a shield with respect to objects (e.g., stones) thrown at high speed by the movement of the blades.

Typical examples of cutting units in which a cutting plate is provided with an idle protection disc are illustrated in EP3136835B1, WO2021/225494A1 and CN115868310A. As already mentioned, in the solutions illustrated in the aforesaid documents, the idle disc is mounted, by interposition of special bearings, to the hub of the cutting plate. Thus, the cutting plate hub crosses the cutting plate to connect, on one side, to the drive shaft and to allow, on the other side, the mounting of the idle protection disc. The Applicant has observed that the configuration of the cutting units provided with an idle protection disc is complex and makes the maintenance operations of the cutting units particularly laborious. In fact, if it were necessary to carry out maintenance operations (e.g., to resolve a malfunction), it would be necessary to disassemble the entire cutting unit in order to be able to access the idle protection disc and/or the cutting plate.

Furthermore, the Applicant has observed that the solutions on the market to date are all designed ad hoc so as to have a unique association between the cutting plate and the idle protection disc. In other words, the cutting plates of the solutions on the market are designed to be mounted to a certain idle disc in the context of a specific lawnmower device. By way of example, the cutting plates of documents EP3136835B1, WO2021/225494A1 and CN115868310A are all specifically shaped so that they can only accommodate the hub of a certain type of idle protection disc.

In view of the above, the solutions known in the art concern lawnmower devices that were originally conceived and designed with a certain cutting unit consisting of a cutting plate and an idle protection disc suitably shaped to cooperate with each other. In other words, the idle protection disc designed for one solution is not compatible with the cutting plates of the other solutions and vice versa.

Therefore, the solutions on the market today do not allow retrofitting, that is, adjustment and upgrading, the lawnmower devices without an idle protection disc. In fact, the cutting plates of such devices would not be compatible with the idle protection discs of the cutting units of the most advanced solutions. In addition, the devices without an idle protection disc have a drive chain (shaft and cutting plate hub) that is too short to provide an additional hooking point for the protection disc.

In addition, the technical solutions provided with an idle disc currently on the market require that the protection disc be permanently mounted to the cutting plate. However, in some ground and/or climatic conditions, the advantages generated by the protection disc are overcome by the disadvantages due to the presence of this additional element. Consequently, in some situations it is preferable to use cutting units in which only the cutting plate is present without idle protection disc. To date, the only way to effectively manage all ground situations and/or all weather conditions is to equip oneself with multiple lawnmower devices, where at least one is provided with an idle protection disc and at least one does not have such a disc, with obvious disadvantages from the economic point of view.

### OBJECT OF THE INVENTION

Therefore, the object of the present invention is to solve at least one of the drawbacks and/or limitations of the previous technical solutions.

A first object of the present invention is to provide an accessory arrangement that can be installed in a cutting unit and that allows the grass cutting operations to be carried out safely and effectively.

Another object of the present invention is to provide an accessory arrangement that allows a reduction in friction between the cutting unit and the ground and that allows, at the same time, to increase the autonomy of the mobile device. In particular, the object of the present invention is to make available an accessory arrangement which allows to contain the consumption of the mobile device comprising the cutting unit provided with the accessory arrangement.

A further object of the present invention is to provide an accessory arrangement characterized by an easy and fast mounting.

Another object of the present invention is to provide an accessory arrangement that guarantees convenient and rapid maintenance operations of the cutting unit.

A further object of the present invention is to provide an accessory arrangement that can also be installed on mobile devices initially designed with less advanced cutting units. In particular, the object of the present invention is to illustrate an accessory arrangement which allows retrofitting mobile devices provided with less advanced cutting units and which would otherwise be discontinued.

Another object of the present invention is to provide an accessory arrangement that allows to extend the life cycle of the cutting unit of the mobile device in which it is installed.

A further object of the present invention is to make available an accessory arrangement of a universal type, i.e. capable of being installed in the context of generic cutting units.

An additional object of the present invention is to provide a cutting unit for a mobile device that ensures optimal treatment of the turf.

Yet another object of the present invention is to provide a cutting unit that is particularly flexible and versatile. In particular, the object of the present invention is to illustrate a cutting unit capable of operating in different configurations, so as to allow the choice of the configuration that best suits the conditions of the ground to be treated and/or the weather conditions in which it is to operate.

A further object of the present invention is to make available a cutting unit with a simple and rational structure.

It is still an object of the present invention to provide a cutting unit with a particularly low production cost. Another object of the present invention to provide a mobile device suitable for carrying out grass cutting operations provided with the aforesaid cutting unit and, therefore, achieving the objects listed above. Another object of the present invention is to make available a method for mounting the aforesaid cutting unit. Specifically, the object of the present invention is to provide a method for mounting the cutting unit that is particularly easy to carry out.

A further object of the present invention is to make available a method for integrating a mobile device. In particular, the object of the present invention is to provide an integration method that allows to enrich the functionalities of a mobile device.

These objects, and any others, which will become better apparent during the following description, are substantially achieved by an accessory arrangement for a cutting unit, by a cutting unit for a mobile device, by a mobile device provided with the aforesaid cutting unit, by a method for mounting said cutting unit and by a method for integrating a mobile device according to one or more of the appended claims, as well as according to the following aspects and/or embodiments, variously combined, possibly also with the aforesaid claims.

### ASPECTS OF THE INVENTION

In a first aspect, the present invention concerns an accessory arrangement configured to be installed in a cutting unit for a mobile device. Specifically, the accessory arrangement in accordance with the present invention is configured to be installed in a cutting unit of a mobile device suitable for performing ground maintenance operations, in particular grass cutting operations. By way of non-limiting example, said mobile device is a robotic lawnmower, preferably a self-driving robotic lawnmower.

In one aspect in accordance with the foregoing, said cutting unit includes at least one cutting motor and a cutting plate.

In one aspect in accordance with the foregoing, said cutting plate is rotatable around a first axis of rotation and is connected to the at least one cutting motor by means of at least one motion transmission member. In one aspect in accordance with the foregoing, said cutting plate comprises a support body and at least one blade associated, in particular removably associated, with the support body.

In one aspect in accordance with the foregoing, said support body has a lower surface and an upper surface. Specifically, the upper surface has an opposite orientation with respect to the lower surface. Notably, the lower surface has such an orientation as to face, in use, towards said ground. In other words, said lower surface and said upper surface are opposite to each other. More in detail, in use, said lower surface faces downwards and said upper surface faces upwards.

In the present description, the expressions "lower", "below", "downwards" or similar and the opposite expressions "upper", "above", "upwards" or similar refer to a direction parallel to said first axis of rotation. Preferably, said first axis of rotation is, in use, perpendicular to the ground on which said mobile device moves.

In one aspect in accordance with the foregoing, said at least one motion transmission member is constrained to the support body at said upper surface, i.e. at the surface opposite said lower surface.

In one aspect in accordance with the foregoing, said accessory arrangement comprises:
- a protection disc, said protection disc being configured to be interposed, in use, between the ground and said cutting plate along said first axis of rotation; and
- a mounting unit adapted to connect said protection disc to said cutting plate;

In one aspect in accordance with the foregoing, said mounting unit comprises:
- a shaft extending between a first end and a second end, said first end being configured to be fixed to said cutting plate;
- a hub fitted on said shaft and associated with said protection disc, said hub being configured to support said protection disc;
- at least one pair of bearings operatively active between said shaft and said hub and configured to allow a relative rotation between said shaft and said hub around a second axis of rotation so that said protection disc behaves as an idle member remaining substantially stationary in conjunction with a rotation of the cutting plate around said first axis of rotation;
- an axial support member of said hub and of said at least one pair of bearings, said axial support member being applied to said second end of said shaft;
- means for fixing said protection disc to said hub.

In one aspect in accordance with the foregoing, said shaft is configured to be constrained to said lower surface of said support body of the cutting plate. In particular, said shaft has, at said first end, an abutment surface configured to press against said lower surface of said support body of the cutting plate when said accessory arrangement is applied to said cutting unit.

In one aspect, the second axis of rotation is parallel to the first axis of rotation.

In one aspect, said shaft is fixed to said support body by anchoring means. In particular, said anchoring means comprises at least one screw. Preferably, said anchoring means comprise a plurality of screws angularly equidistant from each other around said second axis of rotation. More preferably, said anchoring means comprise four screws spaced from each other by a 90° angle around said second axis of rotation. In one aspect, said anchoring means are configured to engage with said at least one motion transmission member so that said accessory arrangement and said cutting plate are simultaneously connected to the at least one cutting motor.

In one aspect, said at least one pair of bearings is a pair of rolling bearings.

In one aspect, said at least one pair of bearings comprises at least one pair of ball bearings and/or at least one pair of roller bearings.

In one aspect, said at least one pair of bearings is fitted on said shaft.

In one aspect, said axial support member is configured to prevent said at least one pair of bearings from slipping off said shaft. Specifically, said axial support member is configured to also prevent said hub from slipping off said shaft. Consequently, the protection disc being connected to said hub by said fixing means, said axial support member is configured to prevent said protection disc also from slipping off said shaft. In one aspect, said shaft has a threaded longitudinal cavity and said axial support member comprises a screw provided with a head having a diameter greater than an outer diameter of said shaft at said threaded longitudinal cavity so that a peripheral portion of the surface of said head facing said shaft behaves as a support surface for said hub and said pair of bearings.

In one aspect, said hub and said shaft define, in use, a housing volume configured to accommodate said at least one pair of bearings.

In one aspect, said mounting unit comprises a single pair of bearings.

In one aspect, said hub comprises a spacer lip adapted to be interposed between said pair of bearings to prevent mutual contact between the bearings composing said pair of bearings. In other words, said spacer lip prevents a creeping between said pair of bearings, which are independently active between said hub and said shaft.

In one aspect, said spacer lip is defined on an inner wall of said hub.

In one aspect, said mounting unit comprises a covering element. Specifically, said covering element is configured to be positioned between said hub and said lower surface of the support body.

In one aspect, said covering element is configured to be associated, preferably removably, with said hub. In one aspect, said covering element is arranged to at least partially close said housing volume.

In one aspect, said covering element is configured to prevent the introduction of foreign elements into said housing volume.

In one aspect, said covering element comprises at least one hooking element. Preferably, said covering element comprises a plurality of hooking elements optionally angularly equidistant from each other around said second axis of rotation. More preferably, said covering element comprises five hooking elements angularly spaced from each other by 72° around said second axis of rotation.

In one aspect, said at least one hooking element protrudes, in use, from said covering element towards said protection disc.

In one aspect, said at least one hooking element is obtained as a single piece with said covering element. In one aspect, one end of said at least one hooking element is configured to allow a snap or bayonet type connection of said covering element to said hub.

In one aspect, said protection disc has at least one through hole configured to be crossed by said fixing means. Preferably, said protection disc has a plurality of through holes angularly equidistant from each other around said second axis of rotation. More preferably, said protection disc comprises three through holes angularly spaced from each other by 120° around said second axis of rotation.

In one aspect, said hub comprises at least one seat configured to accommodate said fixing means; Preferably, said hub comprises a plurality of seats for accommodating said fixing means. More preferably, said hub comprises three seats for accommodating said fixing means.

In one aspect, said at least one through hole and said at least one seat are configured to be, in use, aligned along a direction parallel to said first axis of rotation.

In one aspect, said fixing means comprises at least one screw.

In one aspect, said at least one seat comprises a threaded portion adapted to couple with said fixing means.

In one aspect, said protection disc has, at a peripheral portion, at least one opening. Preferably, said protection disc comprises a plurality of openings angularly equidistant from each other around said second axis of rotation. More preferably, said protection disc comprises a first opening and a second opening angularly spaced from each other by 180° around said second axis of rotation.

In one aspect, said at least one opening is configured to allow access to said at least one blade of said cutting plate in order to perform a maintenance or replacement operation of said at least one blade.

In one aspect, said protection disc has a central hole. In particular, said central hole allows access to said mounting unit.

In one aspect, said central hole is configured to allow access to said axial support member.

In one aspect, said accessory arrangement comprises at least one capping element. Said capping element is adapted to be selectively applied to said protection disc to at least partially occlude said central hole.

In one aspect, said capping element is configured to be applied to said protection disc by said fixing means so that said capping element and said protection disc are simultaneously connected to said hub by said fixing means.

In one aspect, a portion of said protection disc adjacent to said central hole remains interposed and pressed between said capping element and said hub.

In one aspect, said capping element has at least one through hole configured to be crossed by said fixing means.

In one aspect, said at least one through hole of said capping element, said at least one through hole of said protection disc and said at least one seat of said hub are configured to be, in use, aligned along a direction parallel to said second axis of rotation.

In one aspect, said mounting unit comprises a gasket, preferably of toroidal conformation, applied between said capping element and said protection disc.

In one aspect, said protection disc has a concavity at a respective central portion. Specifically, said central portion of said protection disc extends away from said mounting unit by effect of said concavity.

In one aspect, said concavity is made in said protection disc by means of a deep-drawing process.

In one aspect, said concavity is configured to at least partially accommodate said axial support member. In particular, said concavity is configured to accommodate a lower end portion of said axial support member.

In one aspect, said at least one through hole of said protection disc is made in a radially outer zone with respect to said central portion in which said concavity is obtained.

In a further aspect, the present invention concerns a cutting unit for a mobile device suitable for performing grass cutting operations. In particular, the mobile device is a robotic lawnmower, preferably a self-driving robotic lawnmower.

In one aspect, said cutting unit comprises:
- a cutting plate comprising a support body and at least one blade associated with the support body, the support body having a lower surface and an upper surface, the upper surface having an opposite orientation with respect to the lower surface, the lower surface having in particular an orientation such as to face, in use, the ground;
- at least one cutting motor configured to rotate said cutting plate around a first axis of rotation;
- at least one motion transmission member operatively active between said cutting plate and said at least one cutting motor, said at least one motion transmission member being configured to transmit to said cutting plate a motion generated by said at least one cutting motor;
- an accessory arrangement in accordance with one or more of the above aspects.

In accordance with the above aspect, said accessory arrangement is selectively and/or removably constrainable to said lower surface of said support body of the cutting plate.

In one aspect, said support body has a substantially planar conformation. Specifically, said lower surface and said upper surface represent the two most developed faces of said support body.

In one aspect, said support body is substantially conformed as a disc-shaped body. In accordance with this aspect, said support body has a first radius defined as a distance between said first axis of rotation and an outer perimeter of said support body.

In one aspect, said protection disc is substantially conformed as a disc-shaped body. In accordance with this aspect, said protection disc has a second radius defined as a distance between said second axis of rotation and an outer perimeter of said protection disc.

In one aspect, said first radius is less than, or equal to, said second radius.

In one aspect, said lower surface of the support body has an anchoring seat configured to at least partially contain said first end of said shaft.

In one aspect, the first end of said shaft is counter-shaped with respect to said anchor seat. In other words, said anchoring seat is configured to guide the positioning of said shaft so as to allow a correct positioning of the same shaft relative to the support body.

In one aspect, said at least one blade is associated with said support body substantially at said outer perimeter of the support body. In particular, said at least one blade is removably associated with said support body.

In one aspect, said at least one blade extends in a radial direction with respect to said first axis of rotation and projects radially from said support body.

In one aspect, said at least one blade is associated with said support body by means of a pin or a fixing screw.

In one aspect, said protection disc has at least one opening at a distance from said second axis of rotation equal to a distance of said pin or said fixing screw from said first axis of rotation. In particular, said at least one opening selectively allows, depending on the mutual orientation between said support body and said protection disc, an access to said pin or said fixing screw. Specifically, said at least one opening is configured to allow a maintenance or replacement operation of said at least one blade.

In one aspect, said cutting plate comprises a plurality of blades. Preferably, said cutting plate comprises a plurality of blades angularly equidistant from each other around said first axis of rotation. More preferably, said cutting plate comprises six blades angularly spaced from each other by 60° around said first axis of rotation.

In a further aspect, the present invention concerns a mobile device suitable for performing grass cutting operations. In particular, the mobile device is a robotic lawnmower, preferably a self-driving robotic lawnmower.

In one aspect, the mobile device comprises:
- a support frame;
- a cutting unit in accordance with one or more of the following aspects, said cutting unit being associated with said support frame;
- a movement arrangement configured to allow a displacement of said mobile device on said ground;
- at least one traction motor operatively connected to said movement arrangement.

In one aspect, said mobile device is configurable in at least a first configuration, in which said accessory arrangement is installed in said cutting unit, and a second configuration, in which said accessory arrangement is not installed in said cutting unit.

In one aspect, said mobile device is a self-driving robotic lawnmower.

In one aspect, said movement arrangement comprises a plurality of wheels of which at least one wheel is a drive wheel and/or one or more tracks.

In one aspect, said mobile device is electrically powered and comprises a plurality of on-board batteries. Preferably, said batteries are of the rechargeable and removable type.

In one aspect, said at least one cutting motor is an electric motor.

In one aspect, said at least one traction motor is an electric motor.

According to a further aspect, the present invention also concerns a method for mounting a cutting unit to a mobile device suitable for performing grass cutting operations. In particular, the mounting method according to the present invention concerns mounting a cutting unit to a robotic lawnmower, preferably a self-driving robotic lawnmower.

In one aspect, the mounting method comprises at least the following steps:
- providing a cutting unit according to one or more of the above aspects;
- connecting, by means of motion transmission members, at least one traction motor to said upper surface of said support body;
- constraining said shaft to said lower surface of said support body at said first end;
- fitting said hub on said shaft with said at least one pair of bearings interposed between said hub and said shaft;
- applying said axial support member to said second end of said shaft to prevent said hub and said at least one pair of bearings from slipping off;
- constraining said protection disc to said hub by said first fixing means.

Note that the steps of the mounting method may be performed in the order in which they were previously described or in a different order. By way of example, the step of applying said axial support member to said second end of said shaft and the step of constraining said protection disc to said hub may be performed in reverse order to that presented.

In one aspect, said mounting method comprises, prior to said step of fitting said hub on said shaft, a step of associating a covering element with said hub. In accordance with this aspect, said covering element is positioned between said hub and said lower surface of the support body and is configured to prevent the introduction of foreign elements, such as dust or freshly mowed down grass clippings, into the housing volume of the at least one pair of bearings.

In one aspect, said mounting method comprises a step of applying a capping element to at least partial cover said central hole.

In accordance with a further aspect, the present invention concerns a method for integrating a mobile device provided with a cutting plate comprising a support body and at least one blade associated with the support body. In particular, the integration method according to the present invention concerns the integration of a cutting unit of a robotic lawnmower, preferably a self-driving robotic lawnmower.

In one aspect, said integration method comprises at least the following steps:
- providing an accessory arrangement with one or more of the above aspects;
- constraining said shaft to a lower surface of said support body;
- fitting said hub on said shaft with said at least one pair of bearings interposed between said hub and said shaft;
- applying said axial support member to said second end of said shaft to prevent said hub and said at least one pair of bearings from slipping off;
- constraining said protection disc to said hub by said first fixing means.

Note that the steps of the upgrading method may be performed in the order in which they were previously described or in a different order. By way of example, the step of applying said axial support member to said second end of said shaft and the step of constraining said protection disc to said hub may be performed in reverse order to that presented.

In one aspect, said upgrading method also comprises, prior to said step of fitting said hub on said shaft, also a step of associating a covering element with said hub. Specifically, said covering element is positioned between said hub and said lower surface of the support body and is configured to prevent the introduction of foreign elements, such as dust or freshly mowed down grass clippings, into the housing volume of the at least one pair of bearings.

In one aspect, said integration method comprises a step of applying a capping element to at least partially cover said central hole.

### BRIEF DESCRIPTION OF THE DRAWINGS

Some embodiments of the invention will be described hereinafter with reference to the accompanying drawings, provided for indicative and therefore non-limiting purposes only, in which:
- figure 1 is a perspective view of a first embodiment of a cutting unit provided with an accessory arrangement in accordance with the present invention;
- figure 2 is a bottom plan view of the cutting unit referred to in figure 1;
- figure 3 is a front view of the cutting unit referred to in figures 1-2;
- figure 4 is a front sectional view of the cutting unit referred to in figures 1-3 according to the cutting plane IV-IV;
- figure 5 is an exploded view of the cutting unit referred to in figures 1-4;
- figure 6 is a perspective view of a second embodiment of a cutting unit provided with an accessory arrangement in accordance with the present invention;
- figure 7 is a bottom plan view of the cutting unit referred to in figure 6;
- figure 8 is a front view of the cutting unit referred to in figures 6-7;
- figure 9 is a front sectional view of the cutting unit referred to in figures 1-4 according to the cutting plane IX-IX;
- figure 10 is an exploded view of the cutting unit referred to in figures 6-9;
- figure 11 is a schematic view of a mobile device which also forms the object of the present invention.

### DETAILED DESCRIPTION

It should be noted that in the present detailed description, corresponding parts illustrated in the various figures are indicated with the same numerical references. The figures could illustrate the object of the invention through non-scale depictions; therefore, the parts and components illustrated in the figures related to the object of the invention could exclusively relate to schematic depictions.

With reference to the accompanying figures, an accessory arrangement configured to be installed in the context of a cutting unit 100 of a mobile device 200 has been indicated with the reference number "10". Specifically, the mobile device 200 is a mobile device suitable for performing ground maintenance operations, in particular grass cutting operations. By way of non-limiting example, the mobile device 200 is a robotic lawnmower, preferably a self-driving robotic lawnmower. Typically, the ground on which the mobile device 200 is intended to operate coincides with a turf.

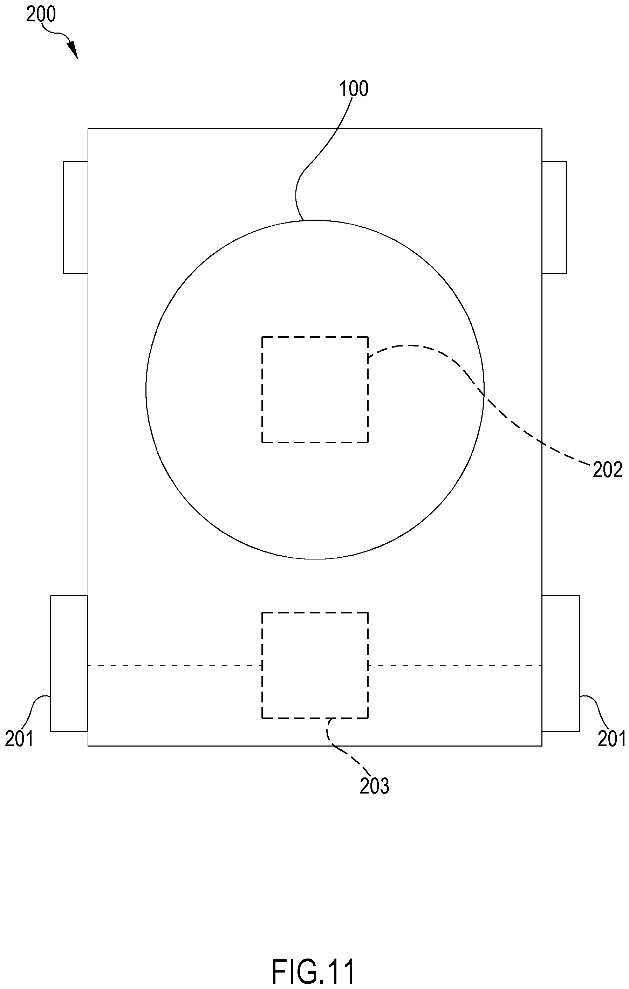

As schematically illustrated in figure 11, the cutting unit 100 includes at least a cutting motor 202 and a cutting plate 1. For reasons of clarity of exposition, reference will be made hereinafter to an embodiment of the mobile device 200 that comprises a single cutting motor 202.

The cutting plate 1 is rotatable around a first axis of rotation Z and is connected to the cutting motor 202 by means of at least one motion transmission member. Specifically, the motion transmission member is configured to transmit to the cutting plate 1 the motion generated by the cutting motor 202 so as to allow the rotation of the same cutting plate around the first axis of rotation V.

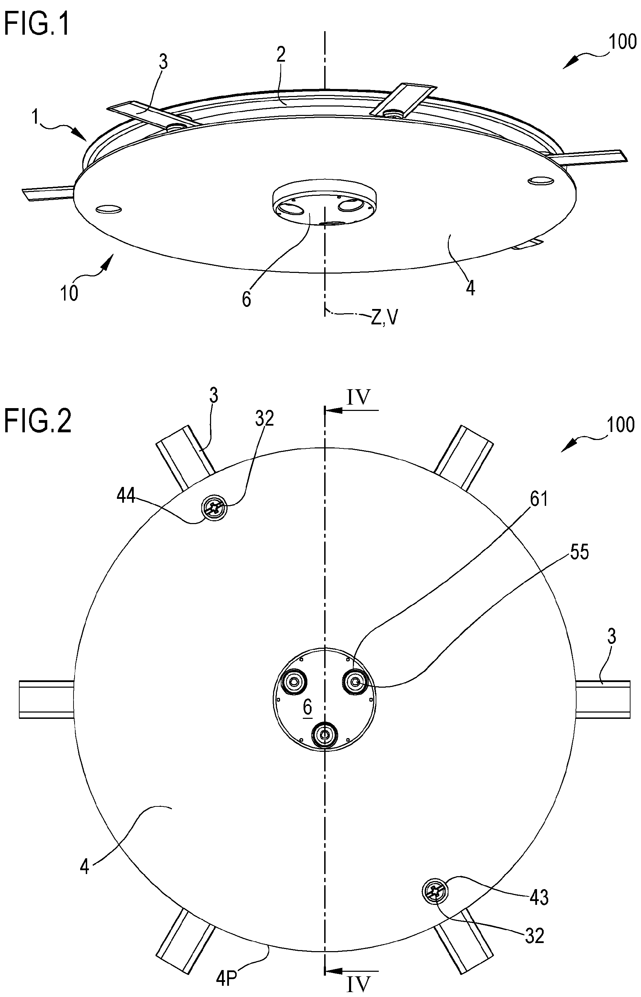

In accordance with what is illustrated in figures 1-10, the cutting plate comprises a support body 2 and at least one blade 3 associated with the support body. In particular, the at least one blade 3 is removably associated with the support body 2.

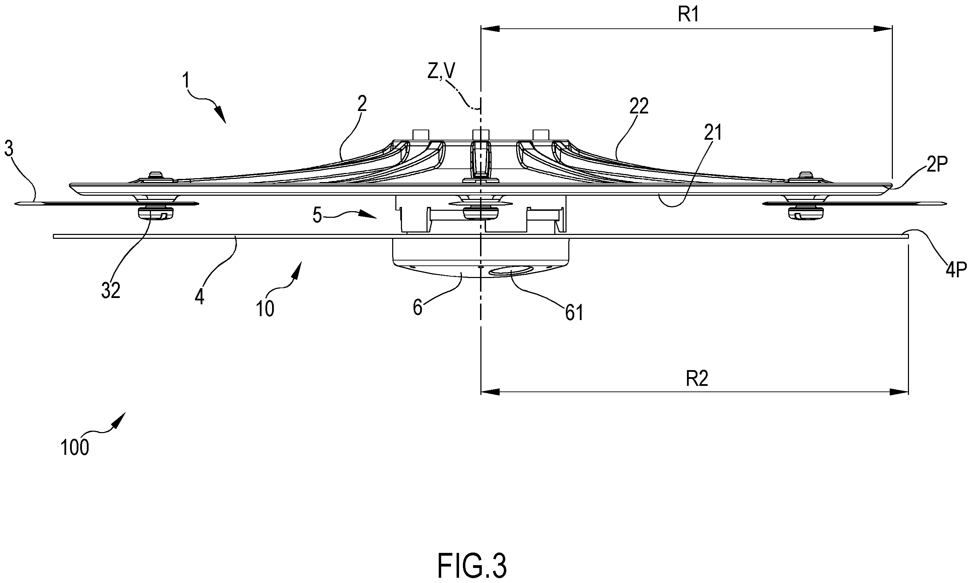

According to what is shown in detail in figures 3-4 and 8-9, the support body 2 has a lower surface 21 and an upper surface 22. Specifically, the upper surface 22 has an opposite orientation with respect to the lower surface 21. Notably, the lower surface 21 has such an orientation as to face, in use, towards said ground. In other words, the lower surface 21 and the upper surface 22 are opposite to each other. In the use configuration of the cutting unit 100 in the context of the mobile device 200, the lower surface 21 faces downwards and the upper surface 22 faces upwards. Note that, in the present description, the expressions "lower", "below", "downwards", or similar, and the opposite expressions "upper", "above", "upwards", or similar refer to a direction parallel to the first axis of rotation Z. Preferably, said first axis of rotation Z is, in use, perpendicular to the ground on which the mobile device 200 moves.

Preferably, the support body 2 has a substantially planar conformation extending in a direction perpendicular to the first axis of rotation Z. Specifically, the lower surface 21 and the upper surface 22 represent the two most developed faces of the support body 2. In the illustrated embodiments, the support body 2 has a substantially discoidal shape, the diameter of which is considerably greater than the thickness of the support body, i.e. than the development of the support body along said first axis of rotation Z.

In order to allow the transmission of the motion generated by the cutting motor 202, the at least one motion transmission member is constrained to the support body 2 at the upper surface 22, i.e. at the surface opposite the lower surface 21. In other words, as will become clearer hereinafter, the members for transmitting the motion generated by the cutting motor 202 are connected to the cutting plate 1, and in particular to the support body 2, from above.

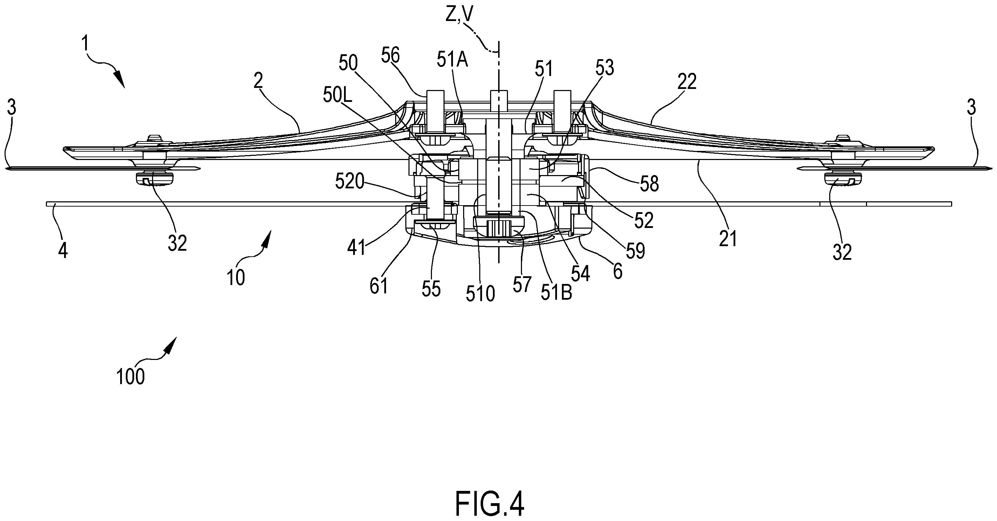

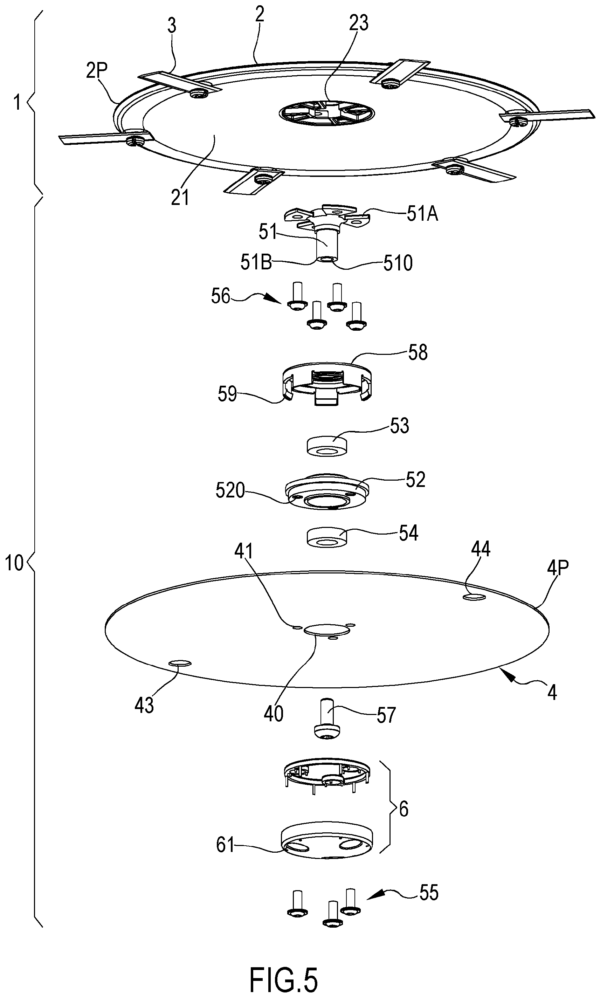

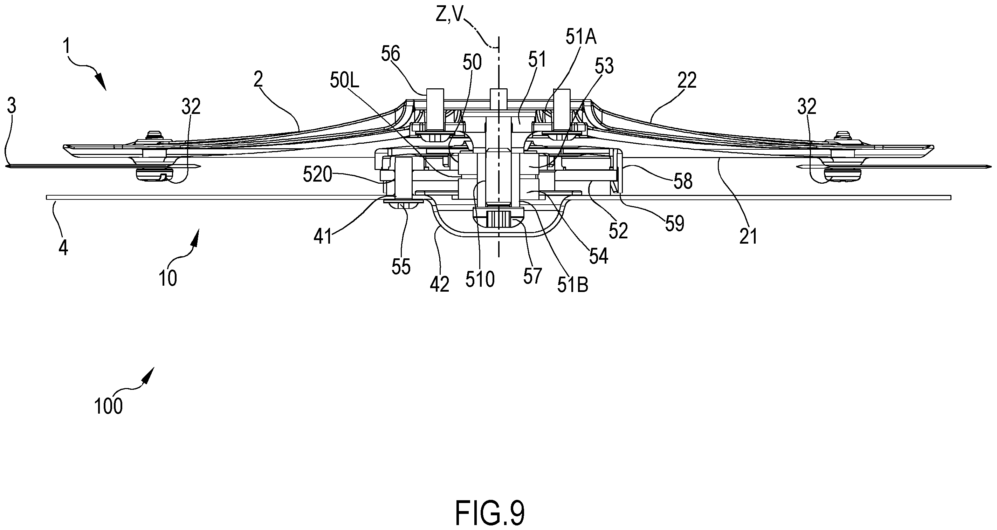

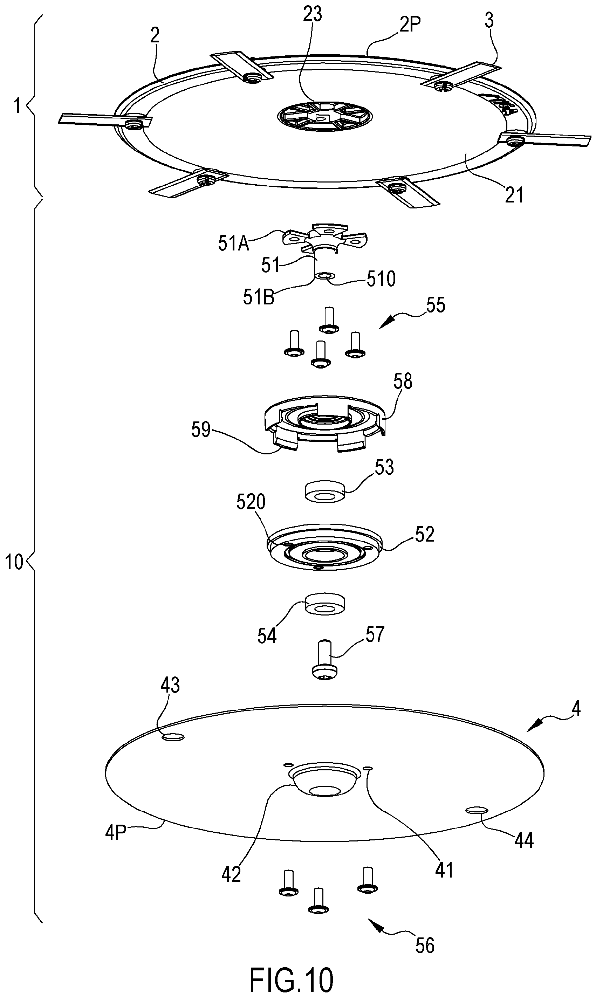

As anticipated, the present description relates to the accessory arrangement 10. In accordance with what is illustrated in figures 1-10, the accessory arrangement 10 comprises a protection disc 4 and a mounting unit 5. Specifically, the protection disc 4 is configured to be interposed, in use, between the ground and the cutting plate 1 along the first axis of rotation X1 while the mounting unit 5 is configured to connect the protection disc 4 to the cutting plate 1. In other words, in use, the protection disc 4 is positioned below the cutting plate 1 so as to be interposed between the cutting plate itself and the ground. The mounting unit 5 is configured to support the protection disc 4, which is operatively connected to the cutting plate 1. According to what is shown in the sectional views of figures 4 and 9 and in the exploded views of figures 5 and 10, the mounting unit 5 comprises:
- a shaft 51;
- a hub 52 fitted on the shaft 51 and associated with the protection disc 4;
- at least one pair of bearings 53, 54, operatively active between the shaft 51 and the hub 52 to allow a relative rotation around a second axis of rotation V;
- an axial support member 57 of the hub 52 and the pair of bearings 53, 54;
- means for fixing 55 the protection disc 4 to the hub 52.

The shaft 51 extends longitudinally between a first end 51A and a second end 51B. Preferably, in use, the shaft 51 extends parallel to said first axis of rotation Z.

As shown for example in figure 4, the first end 51A is configured to be fixed to said cutting plate 1. More particularly, said shaft 51 is configured to be constrained, at the first end 51A thereof, to the lower surface 21 of the support body 2. As evident from the sectional views of figures 4 and 9, the shaft 51 has, at the first end 51A, an abutment surface configured to press against the lower surface 21 of the support body 2 when the accessory arrangement 10 is applied to the cutting unit 1. Note that the shaft 51, and therefore the entire accessory arrangement 10, are connected to the cutting plate 1 at an opposite portion with respect to the portion at which the members for transmitting the motion imparted by the cutting motor 202 are connected. In fact, the shaft 51 is fixed to the lower surface 22 of the support body 2, while the motion transmission members are connected to the upper surface 22 of the support body 2, i.e. to the opposite surface with respect to where the accessory arrangement 10 is connected.

Preferably, the shaft 51 is fixed to the support body 2 by anchoring means 56. More preferably, the anchoring means 56 comprise at least one screw. In detail, the anchoring means 56 comprise a plurality of screws angularly equidistant from each other around said second axis of rotation. In the illustrated embodiments, the anchoring means 56 comprise four screws spaced from each other by means of a 90° angle around the second axis of rotation V.

Preferably, the anchoring means 56 are configured to engage with the at least one motion transmission member so that the accessory arrangement 10 and the cutting plate 1 are simultaneously connected to the cutting motor 202. In other words, the anchoring means 56 are configured to transmit to the shaft 51 the motion generated by the cutting motor 202 and imparted to the cutting plate 1 by means of the at least one transmission member.

Preferably, the lower surface 21 of the support body 2 has an anchoring seat 23 configured to at least partially contain the first end of the shaft 51. In the illustrated embodiments, the first end 51A of the shaft 51 is counter-shaped with respect to the anchoring seat 23. In other words, the anchoring seat 23 is configured to guide the positioning of the shaft 51 so as to allow a correct positioning of the shaft itself relative to the support body 2 and favour the insertion of the anchoring means 56.

The hub 52 is configured to support the protection disc 4, i.e. the hub 52 acts as a support element for the protection disc. As shown in the accompanying figures, in use, the hub 52 is positioned above the protection element 4, which is substantially hooked at the lower face of the hub itself.

Preferably, in order to connect the protection disc to the hub, the protection disc 4 has at least one through hole 41 and the hub 52 comprises at least one seat 520. Specifically, the at least one through hole 41 is configured to be crossed by the fixing means 55, while the at least one seat 520 is configured to accommodate said fixing means 55. In other words, the fixing means 55 cross the protection disc 4 and are fixed at the at least one seat 520 of the hub 52, so that the protection disc 4 remains substantially trapped and fixed to the hub. Optionally, the mounting unit 5 comprises a gasket, preferably of toroidal conformation, applied between the hub 52 and the protection disc 4.

Preferably, the protection disc 4 comprises a plurality of holes 41 angularly equidistant from each other around the second axis of rotation V. Similarly, the hub 52 comprises a plurality of seats 520 arranged substantially analogously to the plurality of through holes 41 on the protection disc 4. In the illustrated embodiments, the protection disc 4 comprises three through holes 41 angularly spaced from each other by 120° around the second axis of rotation V to which three seats 520 on the hub 520 correspond. Still preferably, the at least one through hole 41 and the at least one seat 520 are configured to be, in use, aligned along a direction parallel to the second axis of rotation V so as to be able to allow the insertion of the relative fixing means 55.

The fixing means 55 preferably comprises at least one screw, more preferably a plurality of screws. In the illustrated embodiments, the fixing means 55 comprise three screws.

Still preferably, the at least one seat 520 comprises a threaded portion adapted to couple with the fixing means 55. In particular, in the embodiments where the fixing means 55 comprise at least one screw, the threaded portion of the at least one seat 520 has a threading complementary to the threading defined on the screw.

In accordance with what is shown in the accompanying figure, the at least one pair of bearings 53, 54 is fitted on the shaft 51. In the illustrated embodiments, the mounting unit 5 comprises a single pair of bearings, respectively composed of a first bearing 53 and a second bearing 54. For reasons of clarity of exposition, the following description refers to embodiments comprising a single pair of bearings, but may be extended, with due expedients, to embodiments comprising multiple pairs of bearings.

The pair of bearings 53, 54 is operatively active between the shaft 51 and the hub 52. Specifically, the pair of bearings 53, 54 is configured to allow a relative rotation between the shaft 51 and the hub 52 around a second axis of rotation V, so that the protection disc 4 behaves as an idle member remaining substantially stationary in conjunction with a rotation of the cutting plate 1 around the first axis of rotation Z. In other words, the pair of bearings 53, 54 makes the protection disc 4 and the cutting plate 1 kinematically independent of each other. Specifically, by interposition of the pair of bearings, the hub 52 and the protection plate 4 constrained thereto are not rotated by the shaft 51, which is fixed to the protection disc 2 of the cutting plate 1 rotated by the cutting motor 202 by means of the motion transmission members.

Preferably, as shown in the embodiments of figures 1-10, the second axis of rotation V coincides with the first axis of rotation Z. Thus, in such embodiments, the cutting plate 1 and the protection disc 4 are coaxial. Preferably, the pair of bearings 53, 54 is a pair of rolling bearings. In the illustrated embodiments, the pair of bearings 53, 54 comprises a pair of ball bearings. In alternative embodiments, the pair of bearings 53, 54 comprises a pair of roller bearings.

As shown in the sectional views of figures 4 and 9, the axial support member 57 is applied to the second end 51B of the shaft 51. In particular, the axial support member 57 is configured to prevent the pair of bearings 53, 54 from slipping off the shaft 51. In addition, the axial support member 57 is configured to also prevent the hub 52 from slipping off the shaft 51. Consequently, since the protection disc 4 is fixed to the hub 52 by said fixing means 55, the axial support member 57 is configured to also prevent the protection disc 4 from slipping off the shaft 51 and therefore the detachment of the protection disc 4 from the cutting unit 100.

Preferably, as shown in the illustrated embodiments, the axial support member 57 comprises a screw and the shaft 51 has a threaded longitudinal cavity 510 at the second end 51B. The threaded longitudinal cavity 510 is configured to at least partially accommodate said axial support member 57, preferably by screwing.

Still preferably, the axial support member 57 is provided with a head having a diameter greater than the outer diameter of the shaft 51 at the threaded longitudinal cavity 510. As shown in the sections of figures 4 and 9, the head of the axial support member, i.e. the part positioned outside the threaded longitudinal cavity 510, is configured as a bulge that acts as a support for the pair of bearings 53, 54 and, consequently, for the hub 52 and the protection disc 4. Specifically, a peripheral portion of the surface of the head of the axial support member 57, in particular a peripheral portion of the surface of the head facing the shaft 51, acts as a support surface for the pair of bearings 53, 54 and, consequently, for the hub 52 and the protection disc 4.

In accordance with what is shown in the sectional views of figures 4 and 9, the hub 52 and the shaft 51 define, in use, a housing volume 50. This housing volume 50 is configured to accommodate the pair of bearings 53, 54 so as to allow a free mutual rotation between the hub 52 and the shaft 51.

Preferably, the hub 52 comprises a spacer lip 50L. This spacer lip 50L is configured to be interposed between the pair of bearings 53, 54 to prevent mutual contact between the first bearing 53 and the second bearing 54. In other words, the spacer lip 50L prevents a creeping between the first bearing 53 and the second bearing 54, which are independently active to kinematically release the hub 52 from the shaft 51. In the illustrated embodiments, the spacer lip 50L is defined on an inner wall of the hub 52. In other embodiments, the spacer lip 50L may be defined on the outer surface of the shaft 51.

Preferably, as shown in the embodiments shown in figures 1-10, the mounting unit 5 comprises a covering element 58, configured to be positioned between the hub 52 and the lower surface 21 of the support body 2. Specifically, the covering element 58 is placed to at least partially close the housing volume 50 and is configured to prevent the introduction of foreign elements, such as dust or freshly mowed down grass clippings, into said housing volume. Advantageously, the presence of the covering element 58 prevents foreign elements from compromising the functionality of the pair of bearings 53, 54 present within the housing volume 50.

The covering element 58 is configured to be associated, preferably removably, with the hub 52. To ensure such connection, the covering element 58 preferably comprises at least one hooking element 59, more preferably a plurality of hooking elements 59. In the illustrated embodiments, the covering element 58 comprises five hooking elements 59 angularly spaced from each other by 72° around said second axis of rotation V. Each hooking element 59 protrudes, in use, from the covering element 58 towards the protection disc 4. Preferably, each hooking element 59 is made as a single piece with the covering element 58. In the illustrated embodiments, one end of each hooking element 59 is configured to allow a snap-type connection of the covering element 58 to the hub 52. Alternatively, one end of each hooking element 59 is configured to allow a bayonet-type connection of the covering element 58 to the hub 52.

Preferably, the protection disc 4 has, at a peripheral portion, at least one opening 43, 44. More preferably, the protection disc 4 comprises a plurality of openings 43, 44 angularly equidistant from each other around the second axis of rotation V. In the illustrated embodiment, the protection disc 4 comprises a first opening 43 and a second opening 44 angularly spaced from each other by 180° around the second axis of rotation V. Each opening 43, 44 is configured to allow access to at least one blade 3 of the cutting plate 1 in order to perform a maintenance or replacement operation of said blade.

In the first embodiment of the accessory arrangement 10 illustrated in figures 1-5, the protection disc 4 has a central hole 40 configured to allow access to the mounting unit 5, specifically to the axial support member 57. As shown in the section of figure 4, the presence of the central hole 40 allows the axial support element 57 to be acted upon even when the protection disc 4 is fixed to the hub 52. Thereby, it is possible to act directly on the support member 57 without having to dissociate the protection plate 4, for example to remove from the shaft 51 the components of the accessory arrangement 10 leaving only the shaft 51 connected to the cutting plate 1.

Preferably, in the first embodiment according to figures 1-5, the accessory arrangement 10 comprises at least one capping element 6. The capping element 6 is adapted to be selectively applied to the protection disc 4 to at least partially occlude the central hole 40. Preferably, the capping element 6 is configured to be applied to the protection disc 4 by the fixing means 55 so that the capping element 6 and the protection disc 4 are simultaneously connected to the hub 52. Therefore, as shown in figure 4, a portion of the protection disc 4 adjacent to said central hole 40 remains interposed and pressed between the capping element 6 and the hub 52.

In order to allow the connection to the hub 52, the capping element 6 has at least one through hole 61 configured to be crossed by the fixing means 51. In the embodiment illustrated in figures 1-5, the capping element 6 comprises three through holes 61. As shown in the views of figures 4 and 5, the through holes 61 of the capping element 6, the through holes 41 of the protection disc 4 and the seats 520 of the hub 52 are configured to be, in use, aligned along a direction parallel to the second axis of rotation V.

Preferably, the mounting unit 5 comprises a gasket, preferably of toroidal conformation, applied between the capping element 6 and the protection disc 4.

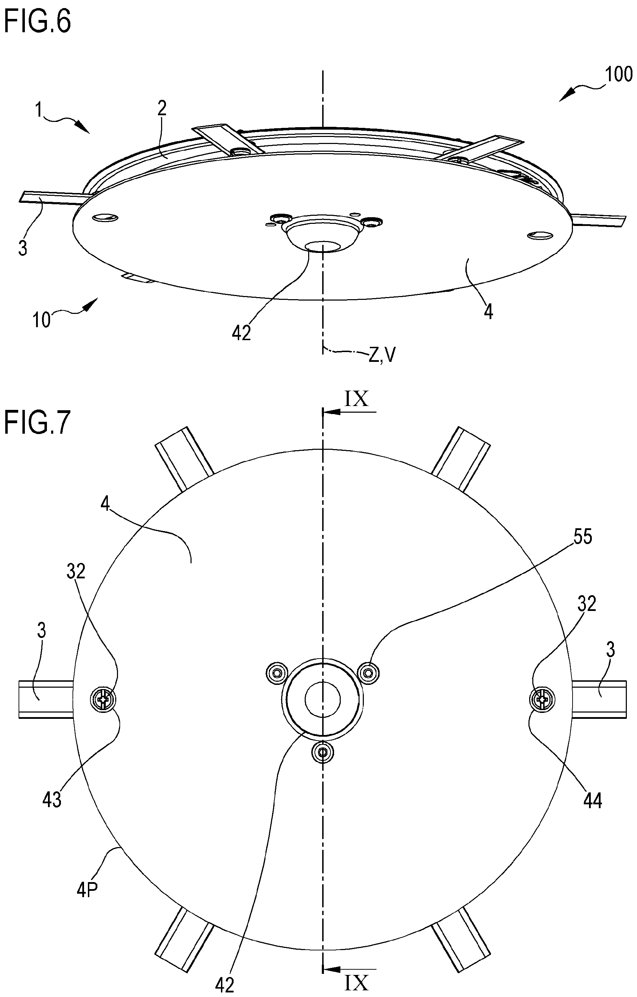

In the second embodiment of the accessory arrangement 10 illustrated in figures 6-10, the protection disc 4 has a concavity 42 at a respective central portion. Specifically, the central portion of the protection disc 4 extends away from the mounting unit 5 by effect of the concavity 42. Preferably, the concavity 42 is made in the protection disc 4 by means of a deep-drawing process.

As apparent from the sectional view of figure 9, the concavity 42 is configured to at least partially accommodate the axial support member 57. In particular, the concavity is configured to accommodate a lower end portion (i.e., the head) of the axial support member 57. As shown for example in figure 10, the through holes of the protection disc 4 are made in a radially outer zone with respect to the central portion in which the concavity 42 is obtained.

The present description also relates to the cutting unit 100 for a mobile device 200, also illustrated in figures 1-10 and already partially described above.

In accordance with what has been set above, the cutting unit 100 comprises:
- a cutting plate 1 comprising the support body 2 and at least one blade 3 associated with the support body 2;
- the cutting motor 202 configured to rotate the cutting plate 1 around the first axis of rotation Z;
- the motion transmission member, or members, operatively active between the cutting plate 1 and the cutting motor 202;
- the accessory arrangement 10 described above.

Specifically, the accessory arrangement 10 is selectively and/or removably constrainable to the lower surface 21 of the support body 2 of the cutting plate 1. In other words, depending on the operational needs, the accessory arrangement 10 can be mounted to and dismounted from the cutting plate 1. It is again noted that, when installed in the cutting unit 100, the accessory arrangement 10 is connected to the cutting plate 1 at the opposite surface with respect to where the motion transmission members are connected. In fact, the shaft 51 of the accessory arrangement 10 is constrained to the lower surface 21 of the support body 2, while the motion transmission members are connected to the upper surface 22 of the support body.

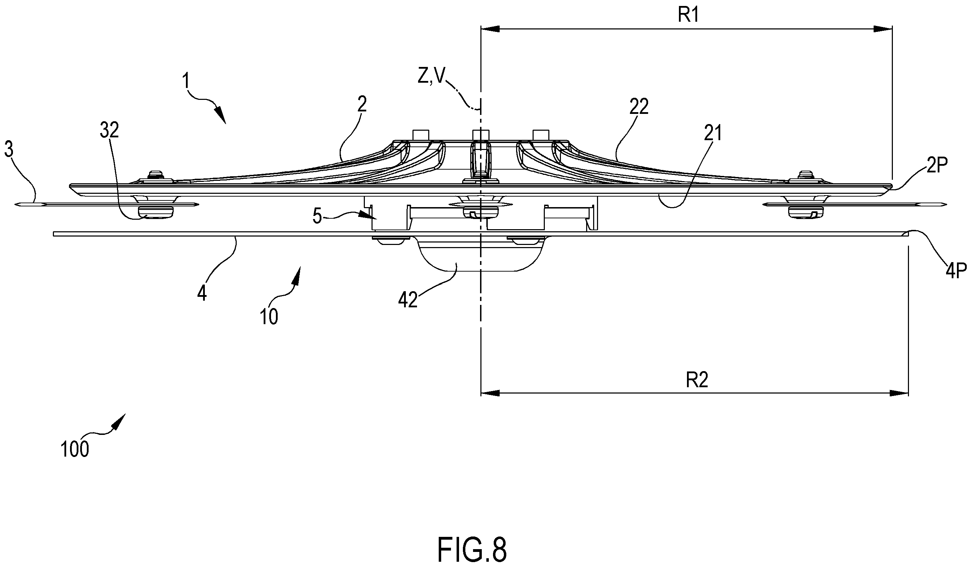

Preferably, as shown in the embodiments of the accompanying figures, the support body 4 is substantially conformed as a disc-shaped body. Specifically, the support body 2 has a first radius R1 defined as the distance between the first axis of rotation Z and an outer perimeter 2P of the support body. In a substantially similar way, the protection disc 4 is also substantially conformed as a disc-shaped body and has a second radius R2 defined as a distance between the second axis of rotation V and an outer perimeter 4P of the protection disc itself. In accordance with what is shown in figures 3 and 8, the first radius R1 is preferably less than, or equal to, the second radius R2. Therefore, the projection of the projection disc 4 on a plane perpendicular to the first axis of rotation Z (and to the second axis of rotation V) is greater than the projection of the support body 2 on the same plane. In this sense, the protection disc 4 prevents the support body 2 from coming into contact with the grass on the ground and minimizes the friction between the cutting plate 1 and the ground, resulting in advantages in terms of efficiency in mowing the grass and increasing the autonomy of the mobile device 200 in which the cutting unit 100 is installed.

Preferably, the cutting plate 1 comprises a plurality of blades 3, more preferably a plurality of blades angularly equidistant from each other around the first axis of rotation Z. By way of example, in the illustrated embodiments, the cutting plate 1 comprises six blades angularly spaced from each other by 60° around said first axis of rotation Z.

Preferably, each blade 3 is associated with the support body 2 substantially at the outer perimeter 2P of the support body 2. In particular, each blade 3 is removably associated with the support body 2. As illustrated in the accompanying figures, each blade 3 is associated with the support body 2 by means of a pin or a fixing screw 32.

As clearly shown in the views of figures 2 and 7, the openings 43, 44 of the protection disc are placed at a distance from said first axis of rotation Z (and from the second axis of rotation V) equal to a distance of said pin or said fixing screw 32 from the same first axis of rotation. Consequently, depending on the mutual orientation between the support body 2 and the protection disc 4, the first opening 43 and/or the second opening 44 selectively allow access to said pin or said fixing screw 32, for example to allow a maintenance or replacement operation of the blade 3.

Preferably, each blade 3 develops in a radial direction with respect to the first axis of rotation Z and projects radially from the support body 2. In particular, the projection of each blade 3 on a plane perpendicular to the first axis of rotation Z (and to the second axis of rotation V) emerges from the projection of the protection disc 4 on the same plane so as to allow the blades 3 to properly perform the grass cutting operations.

It is also an object of the present description a mobile device 200 suitable for performing grass cutting operations, schematically illustrated in Fig. 11. By way of non-limiting example, the mobile device 200 has been illustrated as a robotic lawnmower, preferably a self-driving robotic lawnmower.

In accordance with what has been shown, mobile device 200 comprises:
- a support frame;
- the cutting unit 100 described above associated with the support frame;
- a movement arrangement 201 configured to allow a displacement of the mobile device 200 on the ground to be treated;
- at least one traction motor 203, operatively connected to the movement arrangement 201.

Preferably, the mobile device 200 is configurable in at least a first configuration, in which the accessory arrangement 10 is installed in the cutting unit 100, and a second configuration, in which the accessory arrangement 10 is not installed in the cutting unit. Advantageously, the possibility of configuring the mobile device 200 at least in the first configuration and in the second configuration allows to have the most suitable cutting unit 100 for certain operating needs, climatic and/or ground conditions.

Depending on the embodiment, said movement arrangement 201 comprises a plurality of wheels of which at least one wheel is a drive wheel and/or one or more tracks.

Preferably, the mobile device 200 is electrically powered and comprises a plurality of on-board batteries. Preferably, such batteries are of the rechargeable and removable type. Depending on the embodiments, said at least one cutting motor 202 is an electric motor and/or said at least one traction motor 203 is an electric motor.

A method for mounting the cutting unit 100 to the mobile device 200 is now described.

In its essential elements, the mounting method comprises at least the following steps:
- providing the cutting unit 100 described above;
- connecting, by means of motion transmission components, the traction motor 202 to the upper surface 22 of the support body 2;
- constraining the shaft 51 to the lower surface 21 of the support body 2 at the first end 51A;
- fitting the hub 52 on the shaft 51 with the at least one pair of bearings 53, 54 interposed between the hub 52 and the shaft 51;
- applying the axial support member 57 to the second end 51B of the shaft 51 to prevent the hub 52 and the at least one pair of bearings 53, 54 from slipping off;
- constraining the protection disc 4 to the hub 52 by the first fixing means 55.

Note that the steps of the mounting method may be performed in the order in which they were previously described or in a different order. By way of example, in the method for mounting a cutting unit 100 in accordance with the first embodiment according to figures 1-5, the step of applying the axial support member 57 to the second end 51B of the shaft 51 and the step of constraining the protection disc 4 to the hub 52 can be performed in reverse order to that presented.

Preferably, the mounting method comprises, prior to the step of fitting the hub 52 on the shaft 51, a step of associating the covering element 58 with the hub 52. As previously illustrated, the covering element 58 is positioned between the hub 51 and the lower surface 21 of the support body 2 and is configured to prevent the introduction of foreign elements, such as dust or freshly mowed down grass clippings, into the housing volume 50.

Still preferably, the method for mounting the cutting unit 100 in accordance with the first embodiment according to figures 1-5 comprises a step of applying the capping element 6 to at least partially cover said central hole 40, and therefore the axial support member 57.

In addition, the present description also relates to a method for integrating a mobile device 200 provided with the cutting plate 1 but without the accessory arrangement 10.

Specifically, the integration method comprises at least the following steps:
- providing the accessory arrangement 10 described above;
- constraining the shaft 51 to the lower surface 21 of the support body 2;
- fitting the hub 52 on the shaft 51 with the at least one pair of bearings 53, 54 interposed between the hub 52 and the shaft 51;
- applying the axial support member 57 to the second end 51B of the shaft 51 to prevent the hub 52 and the at least one pair of bearings 53, 54 from slipping off;
- constraining the protection disc 4 to the hub 52 by the first fixing means 55.

Note that the steps of the upgrading method may be performed in the order in which they were previously described or in a different order. By way of example, in the method for mounting a cutting unit 100 in accordance with the first embodiment according to figures 1-5, the step of applying the axial support member 57 to the second end 51B of the shaft 51 and the step of constraining the protection disc 4 to the hub 52 can be performed in reverse order to that presented.

Similarly to the previously described mounting method, the upgrading method may also comprise, prior to the step of fitting the hub 52 on the shaft 51, a step of associating the covering element 58 with the hub 52.

Preferably, when the accessory arrangement 10 is in accordance with the first embodiment in accordance with figures 1-5, the upgrading method comprises a step of applying the capping element 6 to at least partially cover said central hole 40, and therefore the axial support member 57.

### ADVANTAGES OF THE INVENTION

The present invention provides important advantages.

As is amply evident from what has been illustrated, the structural and/or functional characteristics of the accessory arrangement 10, the cutting unit 100, the device 200, the mounting method and the upgrading method which are the subject-matter of the present description allow the limits of the prior art to be overcome.

Firstly, when installed in the context of a cutting unit 100 comprising the cutting plate 1, the accessory arrangement 10 allows the grass cutting operations to be performed efficiently and effectively. In fact, the presence of the accessory arrangement 10 makes it possible to minimize the friction between the cutting plate 1 and the grass present on the ground to be treated. Consequently, the rotation of the cutting plate 1 is not hindered and the relative blades guarantee an effective cutting action. Moreover, the lower stress to which the cutting motor 202 is subjected allows to increase the total autonomy of the mobile device 200, a factor of fundamental importance especially when the device is electrically powered, in particular by means of batteries.

In addition, the accessory arrangement 10 allows to extend the life cycle of the cutting unit of the mobile device in which it is installed. In fact, the accessory arrangement 10 allows to reduce the stress to which the motor for driving the cutting members is subjected, in addition to constituting a structural protection adapted to avoid the collision of the cutting plate with foreign objects, such as stones thrown by the rotating blades.

In addition, the accessory arrangement 10 in accordance with the present invention is characterized by an easy and quick mounting. Specifically, the accessory arrangement 10 is mounted directly at the lower surface 21 of the support body 2 of the cutting plate 1, i.e. from below. This property allows a particularly easy mounting of the accessory arrangement 10 at an easily accessible portion of the mobile device. Otherwise, in the known solutions, the protection discs are mounted to the motion transmission members, for example to the hub of the cutting plate. Therefore, the motion transmission members must cross the cutting plate to connect, on one side, to the cutting motor and to allow, on the other side, the mounting of the idle protection disc. This arrangement of the components makes the installation operations of the protection discs particularly laborious.

Consequently, mounting the accessory arrangement 10 from below makes the maintenance operations of the cutting unit 100 particularly convenient and quick. In fact, if it were necessary to perform operations only on the accessory arrangement, the arrangement of the components according to the present invention would allow the accessory arrangement 10 alone to be extracted easily and immediately, leaving the cutting plate 1 connected to the motion transmission members. In the known solutions, instead, almost every maintenance operation requires the substantially total dismounting of the cutting unit, with complex and time-consuming operations.

Another important advantage linked to the present invention is to be able to provide retrofitting operations, i.e. adjustment and upgrading, of mobile devices provided with cutting units without protection discs. Specifically, the accessory arrangement according to the present invention may be conveniently installed at the lower surfaces of the cutting plates of solutions initially designed to operate without a protection disc. Thereby, mobile devices having less advanced cutting units and which would otherwise be discontinued can be upgraded. Specifically, the accessory arrangement 10 according to the present invention is of a substantially universal type and can be mounted to almost any type of cutting plate, in contrast to the solutions of known type, designed ad hoc to couple only with a particular type of cutting plate.

The advantages of the accessory arrangement 10 also extend to the cutting unit 100 comprising this accessory arrangement and, more generally, to the mobile device 200 in which the aforesaid cutting unit is installed.

In addition, the present invention advantageously allows to have a cutting unit that is particularly flexible and versatile. In particular, the cutting unit 100 according to the present invention can be configured in at least two configurations: a first configuration that provides for the presence of the accessory arrangement 10 and a second configuration in which the accessory arrangement is disassociated. Thereby, depending on the ground conditions to be treated and/or the weather conditions, it is possible to choose the configuration that optimizes the turf cutting operations.

A further advantage of the present invention is to make available a cutting unit with a simple and rational structure, which also allows to contain the relative production costs. In fact, the mounting unit 5 according to the present invention must not be engaged on the motion transmission members, but only on the lower surface of the support body of the cutting plate. In this way, the overall structure of the cutting unit 100 is greatly simplified, with consequent advantages also in terms of reduction of production costs.

## Claims

1. Accessory arrangement (10) configured to be installed in a cutting assembly (100) for a mobile device (200) suitable for executing turfgrass cutting operations, the mobile device (200) being in particular a self-driving robot lawnmower, said cutting assembly (100) including at least one cutting motor (202) and a cutting plate (1), the cutting plate (1) being rotatable around a first rotation axis (Z) and being connected to the at least one cutting motor (202) by means of at least one motion transmission member, said cutting plate (1) comprising a support body (2) and at least one blade (3) associated, in particular removably associated, with the support body (2), the support body (2) having a lower surface (21) and an upper surface (22), the upper surface (22) having an opposite orientation with respect to the lower surface (21), the lower surface (21) having in particular an orientation such as to be facing, in use, towards the ground, said at least one motion transmission member being constrained to the support body (2) at said upper surface (22);
said accessory arrangement (10) comprising:
- a protection disc (4), said protection disc (4) being configured to be interposed, in use, between the ground and said cutting plate (1) along said first rotation axis (Z); and
- a mounting unit (5) adapted to connect said protection disc (4) to said cutting plate (1);
wherein said mounting unit (5) comprises:
- a shaft (51) extending between a first end (51A) and a second end (51B), said first end (51A) being configured to be fixed to said cutting plate (1);
- a hub (52) fitted on said shaft (51) and associated with said protection disc (4), said hub (52) being configured to support said protection disc (4);
- at least one pair of bearings (53, 54), operatively active between said shaft (51) and said hub (52) and configured to allow a relative rotation between said shaft (51) and said hub (52) around a second rotation axis (V) so that said protection disc (4) behaves as an idle member, remaining substantially stationary in concurrence with a rotation of the cutting plate (1);
- an axial support member (57) of said hub (52) and of said at least one pair of bearings (53, 54), said axial support member (57) being applied to said second end (51B) of said shaft (51); and
- fixing means (55) of said protection disc (4) to said hub (52);
said accessory arrangement (10) being **characterised in that** said shaft (51) is configured to be constrained to said lower surface (21) of said support body (2) of the cutting plate (1), said shaft (51) having in particular, at said first end (51A), an abutment surface (51C) configured to press against said lower surface (21) of said support body (2) of the cutting plate (1) when said accessory arrangement (10) is applied to said cutting assembly (100).

2. Accessory arrangement (10) according to the preceding claim, wherein said second rotation axis (V) coincides with said first rotation axis (Z);
and/or wherein said shaft (51) is fixed to said support body (2) by anchoring means (56), said anchoring means (56) in particular comprising at least one screw, preferably a plurality of screws angularly equidistanced from each other around said second rotation axis (V), said anchoring means (56) being configured to engage said at least one motion transmission member so that said accessory arrangement (10) and said cutting plate (1) are simultaneously connected to the at least one cutting motor (202); and/or wherein said at least one pair of bearings (53, 54) is fitted on said shaft (51);
and/or wherein said axial support member (57) is configured to prevent a slippage of said at least one pair of bearings (53, 54) from said shaft (51), said axial support member (57) being configured to also prevent a slippage of said hub (52) from said shaft (51);
and/or wherein said shaft (51) has a threaded longitudinal cavity (510) and said axial support member (57) comprises a screw provided with a head having a diameter greater than an outer diameter of said shaft (51) at said threaded longitudinal cavity (510) so that a peripheral portion of the surface of said head facing said shaft (51) behaves as a support surface for said hub (52) and said pair of bearings (53, 54).

3. Accessory arrangement (10) according to claim 1 or 2, wherein said hub (52) and said shaft (51) define, in use, a housing volume (50) configured to house said at least one pair of bearings (53, 54); and/or wherein said mounting unit (5) comprises a single pair of bearings (53, 54);
and/or wherein said hub (52) comprises a spacer lip (50L) adapted to be interposed between said pair of bearings (53, 54) to prevent a mutual contact between the bearings forming said pair of bearings (53, 54); and/or wherein said spacer lip (50L) is defined on an inner wall of said hub (52);
and/or wherein said mounting unit (5) comprises a covering element (58), adapted to be positioned between said hub (52) and said lower surface (21) of the support body (2);
and/or wherein said covering element (58) is placed for at least partially closing said housing volume (50); and/or wherein said covering element (58) is configured to prevent the introduction of foreign elements inside said housing volume (50);
and/or wherein said covering element (58) is configured to be associated, preferably removably, to said hub (52);
and/or wherein said covering element (58) comprises at least one coupling element (59), preferably a plurality of coupling elements, said at least one coupling element (59) protruding from said covering element (58) towards said protection disc (4);
and/or wherein one end of said at least one coupling element (59) is configured to allow a snap-fit or bayonet-type connection of said covering element (58) to said hub (52).

4. Accessory arrangement (10) according to any one of the preceding claims, wherein said protection disc (4) has at least one through hole (41) configured to be crossed by said fixing means (55), preferably a plurality of through holes (41) angularly spaced from each other around said second rotation axis (V);
and/or wherein said hub (52) comprises at least one seat (520) configured to receive said fixing means (55);
and/or wherein said fixing means (55) comprise at least one screw;
and/or wherein said at least one seat (520) comprises a threaded portion adapted to couple with said fixing means (55).

5. Accessory arrangement (10) according to any one of the preceding claims, wherein said protection disc (4) has a central hole (40), said central hole (40) in particular allowing access to said mounting unit (5);
and/or wherein said central hole (40) is configured to allow access to said axial support member (57); and/or wherein said accessory arrangement (10) comprises at least one capping element (6) adapted to be selectively applied to said protection disc (4) to at least partially occlude said central hole (40); and/or wherein said capping element (6) is configured to be applied to said protection disc (4) by said fixing means (55) so that said capping element (6) and said protection disc (4) are simultaneously connected to said hub (52) by said fixing means (55), a portion of said protection disc (4) adjacent to said central hole (40) remaining interposed and pressed between said capping element (6) and said hub (52); and/or wherein said capping element (6) has at least one through hole (61) configured to be crossed by said fixing means (55);
and/or wherein said at least one through hole (61) of said capping element (6), said at least one through hole (41) of said protection disc (4) and said at least one seat (520) of said hub (52) are configured to be, in use, aligned along a direction parallel to said second rotation axis (V).

6. Accessory arrangement (10) according to any one of claims 1 to 4, wherein said protection disc (4) has a concavity (42) at a respective central portion, the central portion of said protection disc extending away from said mounting unit (5) due to said concavity (42);
and/or wherein said concavity (42) is made in said protection disc (4) by means of a deep-drawing process;
and/or wherein said concavity (42) is configured to at least partially accommodate said axial support member (57), in particular a lower end portion of said axial support member (57);
and/or wherein said at least one through hole (41) of said protection disc (4) is made in a radially external zone with respect to said central portion in which said concavity (42) is obtained.

7. Cutting assembly (100) for a mobile device (200) suitable for executing turfgrass cutting operations, the mobile device (200) being in particular a self-driving robot lawnmower, said cutting assembly (100) comprising:
- a cutting plate (1) comprising a support body (2) and at least one blade (3) associated with the support body (2), the support body (2) having a lower surface (21) and an upper surface (22), the upper surface (22) having an opposite orientation with respect to the lower surface (21), the lower surface (21) having in particular an orientation such as to be facing, in use, towards the ground;
- at least one cutting motor (202) configured to rotate said cutting plate (1) around a first rotation axis (Z);
- at least one motion transmission member operatively active between said cutting plate (1) and said at least one cutting motor (202), said at least one motion transmission member being configured to transmit a motion generated by said at least one cutting motor (202) to said cutting plate (1);
- an accessory arrangement (10) according to any one of the preceding claims, wherein said accessory arrangement (10) is selectively and/or removably constrainable to said lower surface (21) of said support body (2) of the cutting plate (1).

8. Cutting assembly (100) according to the preceding claim, wherein said support body (2) has a substantially planar shape, said lower surface (21) and said upper surface (22) representing the two faces of major development of said support body (2);
and/or wherein said support body (2) is substantially shaped like a disc-shaped body, said support body (2) having a first radius (R1) defined as a distance between said first rotation axis (Z) and an outer perimeter (2P) of said support body (2);
and/or wherein said protection disc (4) is substantially shaped like a disc-shaped body, said protection disc (4) having a second radius (R2) defined as a distance between said second rotation axis (V) and an outer perimeter (4P) of said protection disc (4);
and/or wherein said first radius (R1) is less than, or equal to, said second radius (R2).

9. Cutting assembly (100) according to claim 7 or 8, wherein said lower surface (21) of the support body (2) has an anchoring seat (23) configured to at least partially contain said first end (51A) of said shaft (51); and/or wherein said first end (51A) is counter-shaped with respect to said anchoring seat (23);
and/or wherein said at least one blade (3) is removably associated with said support body (2) substantially at said perimeter (2P) of the support body (2);
and/or wherein said at least one blade (3) extends in a radial direction with respect to said first rotation axis (Z) and protrudes from said support body (2);
and/or wherein said at least one blade (3) is associated with said support body (2) by means of a pin or a fixing screw (32);
and/or wherein said protection disc (4) has at least one opening (43, 44) at a distance from said second rotation axis (V) equal to a distance of said pin or said fixing screw (32) from said first rotation axis (Z), said at least one opening (43, 44) selectively allowing, as a function of the mutual orientation between said support body (2) and said protection disc (4), access to said pin or said fixing screw (32), in particular so as to execute a maintenance or replacement operation of said at least one blade (3);
and/or wherein said cutting plate (1) comprises a plurality of blades (3), preferably a plurality of blades (3) which are angularly equally spaced from each other around said first rotation axis (Z).

10. Mobile device (200) suitable for executing turfgrass cutting operations, the mobile device (200) comprising:
- a support frame;
- a cutting assembly (100) according to any one of claims 7 to 9, said cutting unit (100) being associated with said support frame;
- a movement arrangement (201) configured to allow a movement of said mobile device (200) on said ground;
- at least one traction motor (203) operatively connected to said movement arrangement (201).

11. Mobile device (200) according to the preceding claim, configurable in at least a first configuration, in which said accessory arrangement (10) is installed in said cutting assembly (100), and a second configuration, in which said accessory arrangement (10) is not installed in said cutting assembly (100); and/or wherein said mobile device (200) is a self-driving robot lawnmower;
and/or wherein said movement arrangement (201) comprises a plurality of wheels of which at least one wheel is a driving wheel and/or one or more tracks;
and/or wherein said mobile device (200) is electrically powered and comprises a plurality of on-board batteries, said batteries preferably being rechargeable and removable;
and/or wherein said at least one cutting motor (202) is an electric motor and/or said at least one traction motor (203) is an electric motor.

12. Method for mounting a cutting assembly (100) to a mobile device (200), in particular to a self-driving robot lawnmower, suitable for executing turfgrass cutting operations, said mounting method comprising at least the following steps:
- arranging a cutting assembly (100) according to any one of claims 7 to 9;
- connecting, by means of motion transmission members, at least one cutting motor (202) to said upper surface (22) of said support body (2);
- constraining said shaft (51) to said lower surface (21) of said support body (2) at said first end (51A);
- fitting said hub (52) on said shaft (51) with said at least one pair of bearings (52, 53) interposed between said hub (52) and said shaft (51);
- applying said axial support member (57) to said second end (51B) of said shaft (51) to prevent the slippage of said hub (52) and of said at least one pair of bearings (52, 53);
- constraining said protection disc (4) to said hub (52) by means of said first fixing means (55).

13. Method for mounting according to the preceding claim, comprising, prior to said step of fitting said hub (52) on said shaft (51), a step of associating a covering element (58) to said hub (52), said covering element (58) being positioned between said hub (52) and said lower surface (21) of the support body (2) and being configured to prevent the introduction of foreign elements in said housing volume (50) of the at least one pair of bearings (52, 53);
and/or wherein said mounting method comprises a step of applying a capping element (6) at least partially covering said central hole (40).

14. Method for integrating a mobile device (200), in particular a self-driving robot lawnmower, provided with a cutting plate (1) comprising a support body (2) and at least one blade (3) associated with the support body (2), said integration method comprising at least the following steps:
- arranging an accessory arrangement (10) according to any one of claims 1 to 7;
- constraining said shaft (51) to a lower surface (21) of said support body (2);
- fitting said hub (52) on said shaft (51) with said at least one pair of bearings (52, 53) interposed between said hub (52) and said shaft (51);
- applying said axial support member (57) to said second end (51B) of said shaft (51) to prevent the slippage of said hub (52) and said at least one pair of bearings (52, 53);
- constraining said protection disc (4) to said hub (52) by said first fixing means (55).

15. Method for integrating according to the preceding claim, further comprising, prior to said step of fitting said hub (52) on said shaft (51), a step of associating a covering element (58) to said hub (52), said covering element (58) being positioned between said hub (52) and said lower surface (21) of the support body (2) and being configured to prevent the introduction of foreign elements in said housing volume (50) of the at least one pair of bearings (52, 53);
and/or wherein said integration method comprises a step of applying a capping element (6) at least partially covering said central hole (40).
